# EUROPEAN PATENT APPLICATION

(11) **EP 2 161 563 A1**
(43) Date of publication of application: **10.03.2010**
(21) Application number: 08765669.0
(22) Date of filing: 16.06.2008
(51) Int. Cl.: G01N 21/27, G01N 21/78

(54) **ANALYZING DEVICE AND ANALYZING METHOD**

(30) Priority: 22.06.2007 JP 2007165485
(71) Applicant: Beckman Coulter, Inc., Brea, CA 92821 (US)
(72) Inventor: OKABAYASHI, Osamu, Shizuoka 411-0931 (JP)
(74) Representative: Müller-Boré & Partner Patentanwälte
(86) International application number: PCT/JP2008/060986
(87) International publication number: WO 2009/001704

(57) **Abstract**

An analyzer (1) and an analysis method corrects the absorbance of a reaction liquid of a specimen to be analyzed and a reagent by using the gradient of a straight line indicating the relationship between the concentrations and the absorbances of two or more identifying samples having different concentrations and having the absorbance characteristics such that there is a simple slope in a wavelength band including a desired wavelength to be measured, and a reference gradient that is the gradient of a straight line that indicates a relationship between the concentrations and the absorbances of the identifying samples obtained in advance for the desired wavelength, whereby an analysis result with high analysis accuracy can be obtained even for an analysis item for which a calibration process using a calibrator cannot be performed.

## Description

### TECHNICAL FIELD

The present invention relates to an analyzer that analyzes a specimen on the basis of an absorbance of a reaction liquid of the specimen and a reagent and to an analysis method.

### BACKGROUND ART

An analyzer that adds a specimen in a reaction vessel in which a reagent is dispensed, measures optical characteristics such as an absorbance of the reaction liquid after reaction between the reagent and the specimen in the reaction vessel, and analyzes the specimen on the basis of the measurement result has been conventionally known as an apparatus that simultaneously performs an analysis process on a large number of specimens such as blood or body fluid for a plurality of analysis items. In such an analyzer, a calibration curve that is the criteria of an optical measurement process is set on the basis of an analysis result obtained by analyzing a calibrator (standard substance) that indicates known results, and a measurement result is corrected by using the calibration curve so that analysis accuracy is ensured (see Patent Document 1).

Patent document 1: Japanese Patent Application Laid-open No. H8-262028

### DISCLOSURE OF INVENTION

### PROBLEM TO BE SOLVED BY THE INVENTION

However, calibrators with high accuracy are not created for all analysis items. Because a calibrator with high accuracy is not available, for example, for an analysis item for which a predetermined enzyme is detected, a calibration process cannot be performed. Therefore, because a measurement error in an optical measuring system cannot be corrected for an analysis item for which the calibration process cannot be performed, there are problems in that it is difficult to enhance the accuracy of analysis data to be output to the same level as that for an analysis item for which a calibration process is available, and the inter-device difference of analysis data output from each analyzer is large.

The present invention has been made to solve the above problems, and an object of the present invention is to provide an analyzer and an analysis method that make it possible to obtain an analysis result with high analysis accuracy even for an analysis item for which a calibration process cannot be performed.

### MEANS FOR SOLVING PROBLEM

To solve the problems described above and achieve the object, an analyzer according to the present invention analyzes a specimen on basis of an absorbance of a reaction liquid of the specimen and a reagent. The analyzer includes a measuring unit that measures absorbances of two or more identifying samples having different concentrations and having absorbance characteristics such that there is a simple slope in a wavelength band including a desired wavelength to be measured and also measures an absorbance of a reaction liquid of a specimen that is an analysis target and a reagent; a calculating unit that calculates a gradient of a straight line indicating a relationship between the concentrations and the absorbances of the identifying samples measured by the measuring unit; a correcting unit that corrects the absorbance of the reaction liquid of the specimen and the reagent measured by the measuring unit by using a reference gradient that is a gradient of a straight line indicating a relationship between concentrations and absorbances of the identifying samples obtained in advance for the desired wavelength, and the gradient calculated by the calculating unit; and an analyzing unit that analyzes the specimen on the basis of the absorbance corrected by the correcting unit.

In the analyzer according to the present invention as set forth in the invention described above, the correcting unit multiplies the absorbance of the reaction liquid of the specimen and the reagent measured by the measuring unit by a value of a ratio of the reference gradient to the gradient calculated by the calculating unit, thereby obtaining a correction value of the absorbance of the reaction liquid of the specimen and the reagent.

In the analyzer according to the present invention as set forth in the invention described above, the identifying samples are pigment solutions.

In the analyzer according to the present invention as set forth in the invention described above, the identifying samples are optical filters.

To solve the problems described above and achieve the object, an analysis method according to the present invention is for analyzing a specimen on basis of an absorbance of a reaction liquid of the specimen and a reagent. The analysis method includes a first measuring step of measuring absorbances of two or more identifying samples having different concentrations and having absorbance characteristics such that there is a simple slope in a wavelength band including a desired wavelength to be measured; a calculating step of calculating a gradient of a straight line indicating a relationship between the concentrations and the absorbances of the identifying samples measured at the first measuring step; a second measuring step of measuring an absorbance of a reaction liquid of a specimen that is an analysis target and a reagent; a correcting step of correcting the absorbance of the reaction liquid of the specimen and the reagent measured at the second measuring step by using a reference gradient that is a gradient of a straight line indicating a relationship between concentrations and absorbances of the identifying samples obtained in advance for the desired wavelength, and the gradient calculated at the calculating; and analyzing the specimen on the basis of the absorbance corrected at the correcting.

In the analysis method according to the present invention as set forth in the invention described above, at the correcting step, a correction value of the absorbance of the reaction liquid of the specimen and the reagent is obtained by multiplying the absorbance of the reaction liquid of the specimen and the reagent measured at the second measuring step by a value of a ratio of the reference gradient to the gradient calculated at the calculating step.

In the analysis method according to the present invention as set forth in the invention described above, the identifying samples are pigment solutions.

In the analysis method according to the present invention as set forth in the invention described above, the identifying samples are optical filters.

### EFFECT OF THE INVENTION

According to the present invention, the absorbance of a reaction liquid of a specimen that is an analysis target and a reagent is corrected by, not using a calibration curve obtained by a calibration process, but using the gradient of a straight line that indicates the relationship between the concentrations and the absorbances of two or more identifying samples having different concentrations and having the absorbance characteristics such that there is a simple slope in a wavelength band including a desired wavelength to be measured and a reference gradient that is the gradient of a straight line that indicates the relationship between the concentrations and the absorbances of the identifying samples obtained in advance for the desired wavelength, whereby an analysis result with high analysis accuracy can be obtained even for an analysis item for which the calibration process using a calibrator cannot be performed.

### BRIEF DESCRIPTION OF DRAWINGS

FIG. 1 is a schematic diagram that illustrates the configuration of the main part of an analyzer according to an embodiment.
FIG. 2 is a schematic diagram that illustrates the main part of an optical measuring unit depicted in FIG. 1.
FIG. 3 is a diagram that illustrates the absorbance characteristics of acid red that is an identifying sample.
FIG. 4 illustrates measurement results of the absorbance of the acid red, which is obtained by diluting a stock solution that has a predetermined concentration at each dilution ratio, in each concentration for light of wavelength from 570 nm to 575 nm.
FIG. 5 illustrates calculation results of a gradient a of a straight line corresponding to each wavelength from 570 nm to 575 nm depicted in FIG. 4.
FIG. 6 is a diagram that explains a wavelength identifying process performed by a correction-coefficient acquiring unit depicted in FIG. 1.
FIG. 7 is a diagram that explains a correction coefficient used by the correction-coefficient acquiring unit depicted in FIG. 1.
FIG. 8 is a flowchart that illustrates a procedure of a correction-coefficient acquiring process performed by the analyzer depicted in FIG. 1.
FIG. 9 is a flowchart that illustrates a procedure of an analysis process performed by the analyzer depicted in FIG. 1.
FIG. 10 is a schematic diagram that illustrates another example of the main part of the optical measuring unit depicted in FIG. 1.
FIG. 11 is a schematic diagram that illustrates another example of the main part of the optical measuring unit depicted in FIG. 1.

### EXPLANATIONS OF LETTERS OR NUMERALS

- 1: Analyzer
- 2: Measurement system
- 3: Control system
- 11: Specimen transferring unit
- 11a: Specimen vessel
- 11b: Specimen rack
- 12: Specimen dispensing system
- 12a,: 17a Arm
- 13: Reaction table
- 14: Reagent container
- 15: Reagent vessel
- 16: Reading unit
- 17: Reagent dispensing system
- 18: Stirring unit
- 19: Optical measuring unit
- 20: Cleaning unit
- 21: Reaction vessel
- 31: Control unit
- 32: Input unit
- 33: Analyzing unit
- 34: Correction-coefficient acquiring unit
- 35: Storage unit
- 36: Output unit
- 37: Transmitting and receiving unit
- 191: Light source
- 192,: 193, 194 Lens
- 195: Grating
- 196: Slit member
- 197: PDA

### BEST MODE(S) FOR CARRYING OUT THE INVENTION

In the following descriptions, an analyzer that is an embodiment of the present invention will be explained with reference to the drawings taking as an example an analyzer that analyzes a specimen that is a liquid, such as blood or urine, on the basis of the absorbance of the specimen. The present invention is not limited to the embodiment. The same reference numerals are given to the same parts in the drawings.

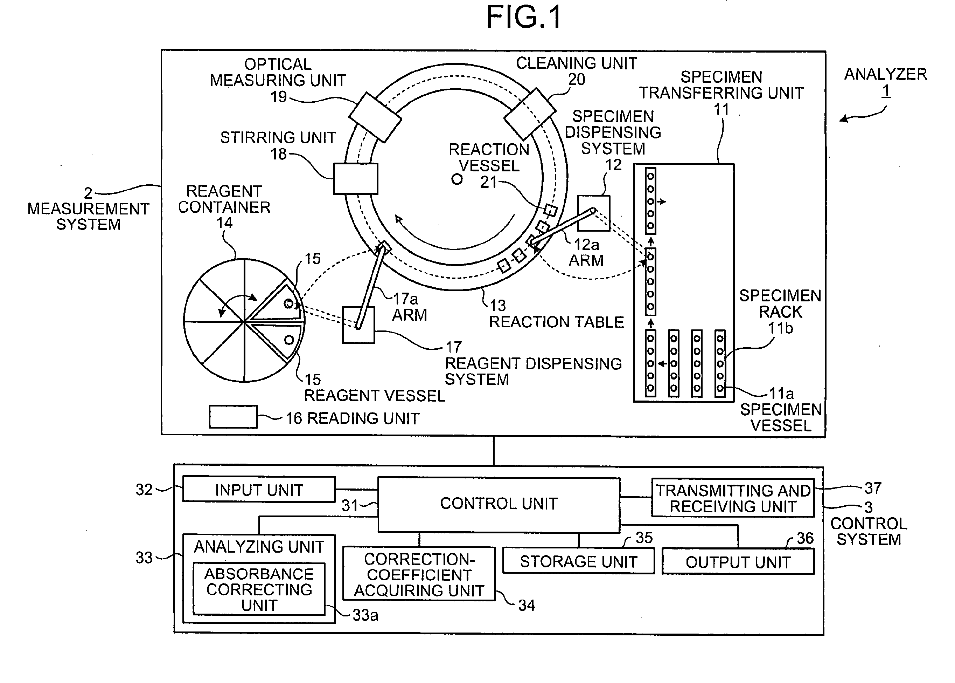

FIG. 1 is a schematic diagram that illustrates the configuration of an analyzer 1 according to the present embodiment. As illustrated in FIG. 1, the analyzer 1 includes a measurement system 2 that dispenses a specimen as a target of the analysis and a reagent into each of reaction vessels 21 and optically measures the reaction that occurs in the reaction vessels 21, and a control system 3 that controls the overall operations of the analyzer 1 including the measurement system 2 and also analyzes a measurement result obtained by the measurement system 2. These two systems cooperate with each other so that the analyzer 1 automatically conducts biochemical analysis on a plurality of specimens.

The measurement system 2 includes, roughly divided, a specimen transferring unit 11, a specimen dispensing system 12, a reaction table 13, a reagent container 14, a reading unit 16, a reagent dispensing system 17, a stirring unit 18, an optical measuring unit 19, and a cleaning unit 20.

The specimen transferring unit 11 includes a plurality of specimen racks 11b that holds a plurality of specimen vessels 11a containing liquid specimen such as blood and urine, and sequentially transfers the specimen vessels 11a in the direction indicated by the arrow in the drawing. The specimen in the specimen vessels 11a transferred to a predetermined position on the specimen transferring unit 11 is dispensed, by the specimen dispensing system 12, into the reaction vessels 21 arranged and transferred on the reaction table 13.

The specimen dispensing system 12 includes an arm 12a that can be moved up and down in the vertical direction and freely rotated about a vertical line that passes through a proximal end portion as a center axis. A probe that sucks up and discharges the specimen is attached to the tip of the arm 12a. The specimen dispensing system 12 includes an unshown suck and discharge system that uses a suck and discharge syringe or a piezoelectric element. The specimen dispensing system 12 causes the probe to suck up the specimen from the specimen vessels 11a transferred to the predetermined position on the specimen transferring unit 11 as described above, swings the arm 12a in the clockwise direction shown in the drawing, and causes the probe to discharge the specimen into the reaction vessel 21, thereby dispensing the specimen.

The reaction table 13 transfers the reaction vessel 21 to a predetermined position to dispense the specimen and reagent into the reaction vessel 21, to conduct stirring or cleaning of the reaction vessel 21, and to measure the light. An unshown driving system is driven under the control of a control unit 31 so that the reaction table 13 is freely rotatable about the vertical line that passes through the center of the reaction table 13a as a rotational axis. An unshown freely openable and closable cover and a constant-temperature tank are located above and under the reaction table 13, respectively.

The reagent container 14 is capable of storing a plurality of reagent vessels 15 that contains reagents to be dispensed into the reaction vessel 21. A plurality of storage cells are arranged in the reagent container 14 at equal intervals, and each of the storage cells contains the reagent vessel 15 in a removable manner. An unshown driving system is driven under the control of the control unit 31 so that the reagent container 14 is freely rotatable in the clockwise direction or counterclockwise direction about a vertical lint that passes through the center of the reagent container 14 as a rotation axis, and transfers a desired reagent vessel 15 to a position where the reagent dispensing system 17 sucks the reagent. An openable and closable cover (not shown) is located above the reagent container 14. A constant-temperature tank is located under the reagent container 14. Therefore, when the reagent vessel 15 is stored in the reagent container 14 and the cover is closed, the reagent contained in the reagent vessel 15 is maintained in a constant-temperature state so that evaporation and degeneration of the reagent contained in the reagent vessel 15 can be prevented.

A recording medium on which reagent information about the reagent contained in the reagent vessel 15 is recorded is attached to the side surface of the reagent vessel 15. The recording medium indicates various types of coded information that is optically read out. The reading unit 16 that optically reads out the recording medium is located on the periphery portion of the reagent container 14. The reading unit 16 emits infrared light or visible light toward the recording medium and processes the reflected light from the recording medium, thereby reading the information recorded on the recording medium. Alternatively, it is possible that the reading unit 16 performs an imaging process on the recording medium and decodes image information obtained by the imaging process, thereby acquiring the information on the recording medium.

In the same manner as the specimen dispensing system 12, the reagent dispensing system 17 includes an arm 17a having a probe that sucks up and discharges the reagent attached to the tip portion of the arm 17a. The arm 17a can be moved up and down in a vertical direction and freely rotated about a vertical line that passes through a proximal end portion thereof as a center axis. The reagent dispensing system 17 causes the probe to suck up the reagent contained in the reagent vessel 15 moved to a predetermined position on the reagent container 14, swings the arm 17a in the clockwise direction shown in the drawing, and dispenses the reagent into the reaction vessel 21 conveyed to a predetermined position on the reaction table 13. The stirring unit 18 stirs the specimen and the reagent dispensed into the reaction vessel 21, thereby accelerating the reaction.

The optical measuring unit 19 irradiates the reaction vessel 21 conveyed to a predetermined optical measurement position with light, spectroscopes the light that has passed through the liquid contained in the reaction vessel 21, and measures the absorbance for a wavelength peculiar to the reaction liquid of the specimen as a target of the analysis and the reagent. The measurement result obtained by the optical measuring unit 19 is output to the control unit 31 and analyzed with an analyzing unit 33. The optical measuring unit 19 measures the absorbances of two or more identifying samples having different concentrations and having the absorbance characteristics such that there is a simple slope in a wavelength band including a desired wavelength to be measured. A range of concentrations of the identifying sample to be measured by the optical measuring unit 19 is defined in accordance with the light-receiving sensitivity characteristics of the optical measuring unit 19. In other words, the upper limit of the range of concentrations of the identifying sample to be measured by the optical measuring unit 19 is defined in accordance with the full width at half maximum of a wavelength of received light in the optical measuring unit 19.

The cleaning unit 20 sucks up and discharges the mixed liquid contained in the reaction vessel 21 by using an unshown nozzle after the measurement is completed by the optical measuring unit 19 and cleans the reaction vessel 21 by injecting and sucking up a cleaning liquid such as a cleanser and cleaning water into and from the reaction vessel 21. Although the cleaned reaction vessel 21 is reused, the reaction vessel 21 may be disposed of after the single measurement is completed depending on the contents of the examination.

The control system 3 is explained next. The control system 3 includes the control unit 31, an input unit 32, the analyzing unit 33, a correction-coefficient acquiring unit 34, a storage unit 35, an output unit 36, and a transmitting and receiving unit 37. Each of the units included in the measurement system 2 and the control system 3 is electrically connected to the control unit 31.

The control unit 31 is constituted with a CPU and the like, and controls processes and operations of each of the units of the analyzer 1. The control unit 31 performs predetermined input and output controls on information input to or output from each of the components and performs predetermined information processing on the information. The input unit 32 includes a keyboard, a mouse, and the like, and acquires various types of information necessary for analysis of a specimen, instructive information for an analysis operation and the like, from outside.

The analyzing unit 33 conducts componential analysis, and the like, of a specimen on the basis of the absorbance measured by the optical measuring unit 19. The analyzing unit 33 includes an absorbance correcting unit 33a that corrects the absorbance of a reaction liquid of a specimen as a target of analysis and a reagent measured by the optical measuring unit 19. The analyzing unit 33 analyzes the specimen as a target of the analysis object on the basis of the absorbance corrected by the absorbance correcting unit 33a.

The correction-coefficient acquiring unit 34 calculates the gradient of a straight line that indicates the relationship between the concentration and the absorbance of the identifying sample measured by the optical measuring unit 19. The correction-coefficient acquiring unit 34 then acquires, as a correction coefficient to be used in a correction process performed by the absorbance correcting unit 33a, the value of the ratio of a reference gradient that is the gradient of a straight line that indicates the relationship between the concentration and the absorbance of the identifying sample and that is obtained in advance for a desired wavelength to be measured, to the calculated gradient. The absorbance correcting unit 33a multiplies the absorbance of the reaction liquid of the specimen and the reagent measured by the optical measuring unit 19 using the correction coefficient acquired by the correction-coefficient acquiring unit 34, thereby obtaining a correction value of the absorbance of the reaction liquid of the specimen and the reagent. In other words, the absorbance correcting unit 33a corrects the absorbance of the reaction liquid of the specimen and the reagent measured by the optical measuring unit 19 by using the reference gradient that is the gradient of the straight line that indicates the relationship between the concentration and the absorbance of the identifying sample and that is obtained in advance for the desired wavelength to be measured and the gradient calculated by the correction-coefficient acquiring unit 34.

Furthermore, the correction-coefficient acquiring unit 34 identifies the wavelength of the light to be actually measured by the optical measuring unit 19. The correction-coefficient acquiring unit 34 obtains the gradient of a straight line that indicates the relationship between the concentrations and the absorbances of the identifying samples to be measured by the optical measuring unit 19. The correction-coefficient acquiring unit 34 compares identifying gradients with the calculated gradient, thereby identifying the wavelength of the light to be actually measured by the optical measuring unit 19. The specifying gradients are the gradients of straight lines that indicate the relationship between the concentrations and the absorbances of the identifying samples and that are obtained in advance for one or more wavelengths. The identifying gradients are obtained for the respective identifying target wavelengths that include the desired wavelength. Each of the identifying gradients is obtained on the basis of the absorbances of the identifying sample at the respective concentrations measured for the respective wavelengths by an optical measuring apparatus having higher light-receiving sensitivity than that of the optical measuring unit 19. The correction-coefficient acquiring unit 34 identifies the wavelength of the light to be actually measured by the optical measuring system on the basis of the degree of coincidence between the identifying gradient(s) and the calculated gradient.

The storage unit 35 includes a hard disk that magnetically stores therein information and a memory that, when the analyzer 1 performs a process, loads various types of programs for the process from the hard disk and electrically stores therein the programs. The storage unit 35 stores therein various kinds of information including the analysis result of the specimen and the like. The storage unit 35 stores therein various types of information that includes an analysis result of a specimen, and the like. The storage unit 35 stores therein the reference gradients that are obtained in advance for the desired wavelength to be measured. The storage unit 35 may store therein the identifying gradients that are obtained in advance for one or more wavelengths. The storage unit 35 may include an auxiliary storage device that can read information recorded on a recording medium, such as CD-ROM, DVD-ROM, or PC card.

The output unit 36 includes a display, a printer, a speaker, and the like, and outputs various types of information that includes an analysis result of a specimen. The output unit 36 may output the wavelength of the light that is identified by the correction-coefficient acquiring unit 34 and actually measured by the optical measuring unit 19. The transmitting and receiving unit 37 has a function as an interface that transmits and receives information in conformity with a predetermined format via an unshown communication network.

In the analyzer 1 that has the configuration as described above, the specimen dispensing system 12 dispenses the specimens contained in the specimen vessels 11a into the plurality of reaction vessels 21 that is sequentially conveyed in a row. After the reagent dispensing system 17 dispenses the reagents contained in the reagent vessels 15 into the plurality of reaction vessels 21, the optical measuring unit 19 conducts spectrophotometric measurement of the specimen that is in a state where the specimen and the reagent are reacted.
After the absorbance correcting unit 33a corrects the measurement result, the analyzing unit 33 analyzes it, whereby the componential analysis, and the like, of the specimen is automatically conducted. The cleaning unit 20 cleans the reaction vessels 21 while the reaction vessels 21 are being conveyed after the measurement is completed by the optical measuring unit 19, whereby a series of analysis operations is continuously and repeatedly conducted.

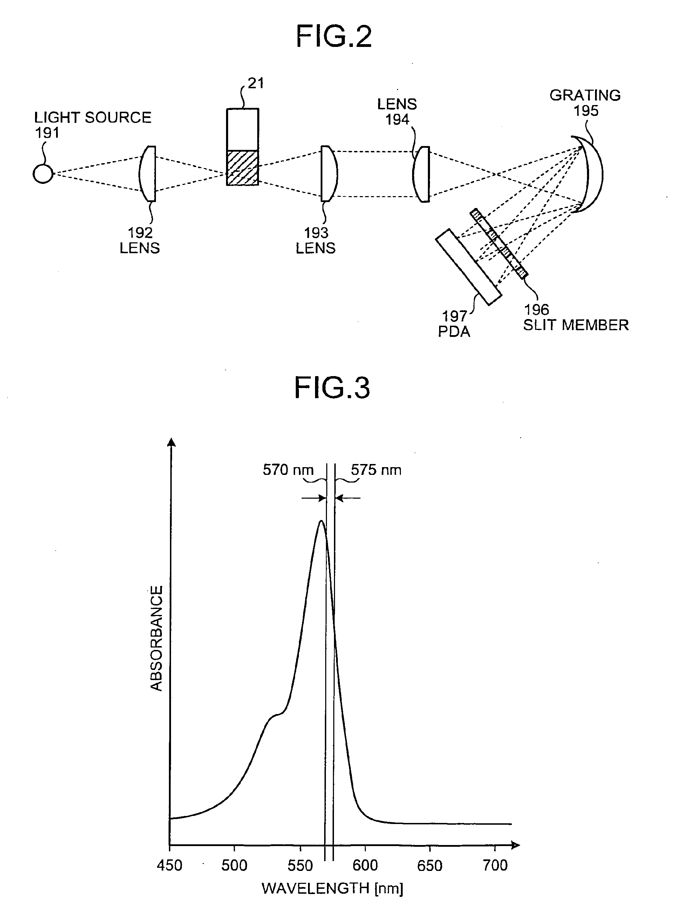

Next, the optical measuring unit 19 shown in FIG. 1 is explained. As shown in FIG. 2, the optical measuring unit 19 includes a light source 191 that emits light, a lens 192 that collects the light emitted by the light source 191 toward the reaction vessel 21, lenses 193 and 194 that collects the light that has passed through the reaction vessel 21 toward a grating 195, the grating 195 that splits the light collected by the lenses 193 and 194, a slit member 196 that concentrates the light split by the grating 195 for each of the wavelengths, and a photodiode array (hereinafter, "PDA") 197 that receives light with each of the wavelengths that is split by the grating 195. Photodiodes (hereinafter "PDs") that each detect the amount of received light of a predetermined wavelength are arranged one-dimensionally or two-dimensionally in the PDA 197. Usually, light of 570 nm wavelength band is used as one of measureming lights in the analyzer that biochemically analyzes specimens such as blood and urine. Therefore, in the present embodiment, a correction-coefficient acquiring process performed by the correction-coefficient acquiring unit 34 and a correction process performed by the absorbance correcting unit 33a will be explained by taking as an example a case where the desired wavelength of light is 570 nm among the wavelengths of light received by the respective PDs of the PDA 197.

First, the identifying sample used for identifying the wavelength of the light of 570 nm band is explained. In the analyzer 1, the light of 570 nm band that is used by the optical measuring unit 19 includes some amount of error, shifting from the desired wavelength due to an adjustment error. For example, if the desired wavelength is 570 nm, there may be an error range of 570 nm to 575 nm. Therefore, in order to maintain high analysis accuracy, the analyzer 1 causes the analyzing unit 33 to perform an analysis process after correcting the absorbance of the light to be actually measured by the optical measuring unit 19 to be the absorbance of the light of the desired wavelength of 570 nm.

In the present embodiment, acid red that is a pigment solution is used as the identifying sample for obtaining the correction coefficient to perform correction to be the absorbance of the light of the desired wavelength of 570 nm. As shown in FIG. 3, the acid red has the absorbance characteristics in which there is a simple and steep slope in the range from 570 nm to 575 nm that is an adjustment error range as well as 570 nm that includes the desired wavelength. Therefore, in the range of 570 nm to 575 nm, acid red causes a great difference in the absorbance even if an absorption wavelength is changed by only 1 nm. As a result, it is possible to determine, by using the absorbances of the acid red, a change in the wavelength of the light absorbed by the acid red by a unit of 1 nm or less. Because the acid red has a high absorbance in the range from 570 nm to 575 nm, even if the acid red is diluted, the acid red can absorb the light of from 570 nm to 575 nm wavelength to a degree that the absorbance can be measured by the optical measuring unit 19. Therefore, if the acid red is diluted to the respective concentrations and the absorbances of the light of the respective wavelengths in the range of 570 nm to 575 nm are measured, the relationship between the concentrations and the absorbances can be obtained for each of the wavelengths.

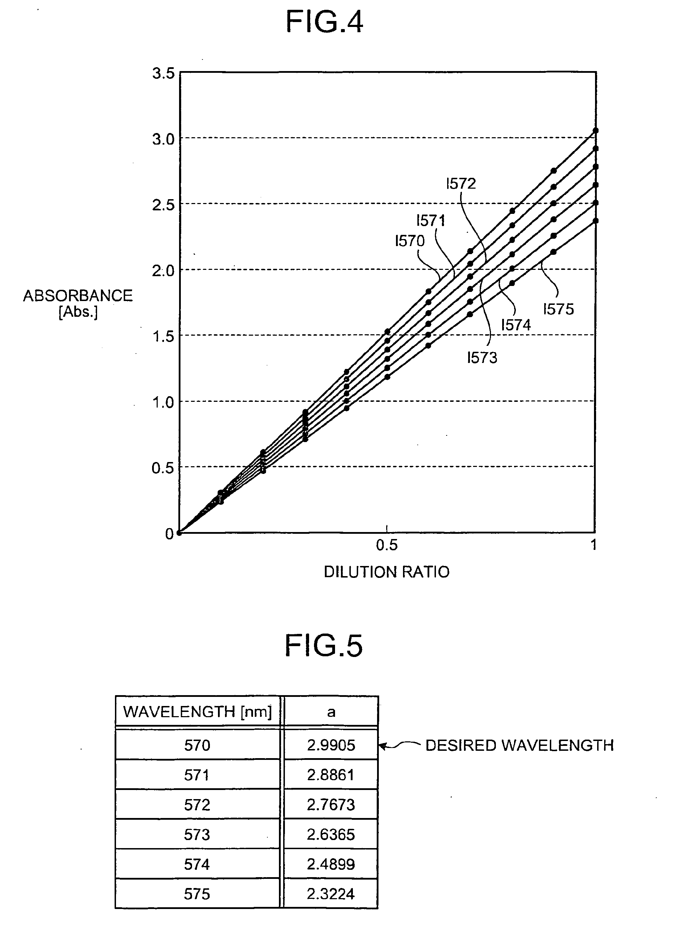

FIG. 4 illustrates measurement results of the absorbances of the acid red at the respective concentrations, which are actually measured by using the light of wavelength of from 570 nm to 575 nm. The acid red having the respective concentrations are obtained by diluting stock solution having a predetermined concentration at their respective dilution ratios. The measurement results illustrated in FIG. 4 correspond to the absorbances of the acid red having 11 different concentration obtained by diluting stock solution having the predetermined concentration by changing the dilution ratio by 0.1, between 0 and 1. Then the absorbance of each of the wavelengths in the range of 570 nm to 575 nm is measured for each of the concentrations of the acid red. As illustrated in FIG. 4, a relationship between the absorbances at the respective wavelengths of the light and the dilution ratios of the acid red can be expressed by a linear function. In FIG. 4, a straight line 1570 indicates a relationship between the absorbances of 570 nm wavelength light and the respective dilution ratios of the acid red; a straight line 1571 indicates a relationship between the absorbances of 571 nm wavelength light and the respective dilution ratios of the acid red; a straight line 1572 indicates a relationship between the absorbances of 572 nm wavelength light and the respective dilution ratios of the acid red; a straight line 1573 indicates a relationship between the absorbances of 573 nm wavelength light and the respective dilution ratios of the acid red; a straight line 1574 indicates a relationship between the absorbances of 574 nm wavelength light and the respective dilution ratios of the acid red; and a straight line 1575 indicates a relationship between the absorbances of 575 nm wavelength light and the respective dilution ratios of the acid red. The absorbance of each concentration of the acid red is measured with a spectrophotometer that has a narrower full-width at half-maximum of the reception wavelength than the full-width at half-maximum of the reception wavelength of the optical measuring unit 19, and the aforementioned spectrophotometer has higher light receiving sensitivity than the optical measuring unit has.

As indicated by the straight lines 1570 to 1575 in FIG. 4, it can be seen that the straight lines that indicate the relationships between the absorbances of the light of the respective wavelengths of 570 nm to 575 nm and the respective dilution ratios of the acid red have different gradients. Furthermore, as indicated by the straight lines 1570 to 1575 in FIG. 4, it is assumed that the straight lines that indicate the relationships between the absorbances of the light of the respective wavelengths of 570 nm to 575 nm and the respective dilution ratios of the acid red have an intercept of substantially zero.

FIG. 5 illustrates calculation results of the gradients "a" of the straight lines corresponding to their respective wavelengths from 570 to 575 nm including the desired wavelength of 570 nm illustrated in FIG. 4. As shown in FIG. 5, the gradients "a" of the straight lines corresponding to the respective wavelengths from 570 nm to 575 nm have different values depending on the respective wavelengths from 570 nm to 575 nm. Because the values of the gradients "a" corresponding to the respective wavelengths are based on a measurement results obtained with the spectrophotometer that has a higher light-receiving sensitivity than that of the optical measuring unit 19 in the analyzer 1, it is considered that the values of the gradients "a" may be treated as being inherent to the respective wavelengths. The gradients "a" of the straight lines that indicate the relationships between the dilution ratios and the absorbances of the acid red corresponding to the respective wavelengths, shown in FIG. 5, are obtained in advance and stored in the storage unit 35.

In the analyzer 1, taking advantage of the fact that the value of the gradient of the straight line that indicates the relationship between the absorbance and each of the concentrations of the acid red that is a pigment solution is inherent to each of the wavelengths, the absorbance that has been actually measured by the analyzer 1 is corrected to be the absorbance that would be obtained when measured with the desired wavelength.

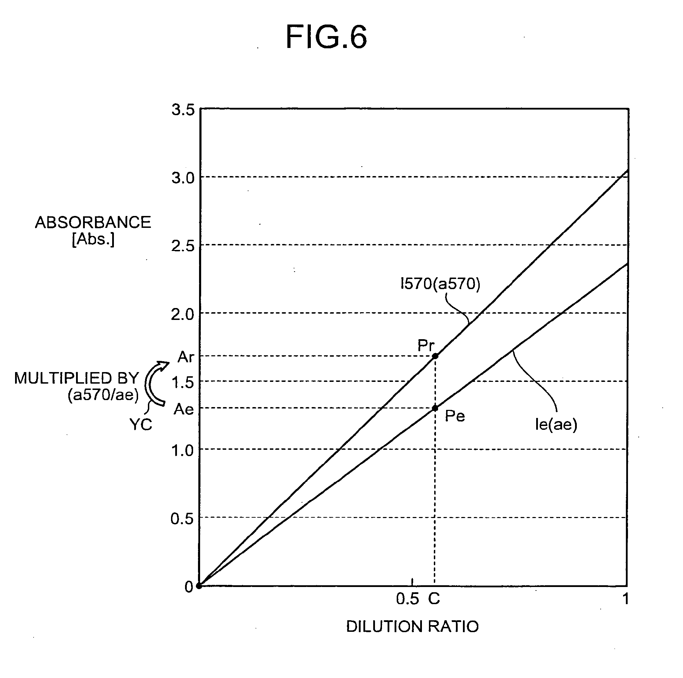

A detailed correction process of the absorbance will be explained with reference to FIG. 6. As described above, the absorbance of the light to be actually measured by the optical measuring unit 19 and the pigment concentration have the relationship given by a linear function that has a gradient in accordance with the wavelength of the light to be actually measured by the optical measuring unit 19. A straight line le with a gradient ae shown in FIG. 6 is obtained as a straight line that indicates the relationship between the dilution ratios of two or more types of the acid red and the absorbances that have been actually measured by the optical measuring unit 19. Specifically, the straight line le indicates the relationship between the absorbance to be actually measured by the optical measuring unit 19 and the pigment concentration. A specimen as an analysis target is reacted with a reagent corresponding to each analysis item, whereby the color of the specimen has the density that corresponds to the concentration of an analysis target, and the absorbance of the reaction liquid of each specimen and the reagent measured by the optical measuring unit 19 appears on the straight line le. Therefore, a measurement point Pe of the specimen that is the analysis target that has been actually measured by the optical measuring unit 19 also appears on the straight line le. As a result, because an absorbance Ae corresponding to the measurement point Pr has the relation indicated by the straight line le, for example, a value of ae x C is obtained with respect to a concentration C.

The straight line 1570 that indicates the relationship between the concentration and the absorbance of the identifying sample obtained in advance for the desired wavelength of 570 nm has a specific gradient a570. Because the value of an absorbance Ar at a point Pr obtained when the specimen as the analysis target is measured with the light of the desired wavelength of 570 nm has the relation indicated by the straight line 1570, for example, the value of a570 x C is obtained with respect to the concentration C.

To obtain the absorbance Ar at the point Pr with the light of the desired wavelength of 570 nm if the absorbance of the specimen as the analysis target that has been actually measured by the optical measuring unit 19 is Ae, the actually measured absorbance Ae is multiplied by Ar/Ae, i.e., (a570/C)/(ae/C), i.e., (a570/ae). In other words, to obtain the value of the absorbance Ar at the point Pr obtained when measured with the light of the desired wavelength of 570 nm, the absorbance Ae actually measured by the optical measuring unit 19 is multiplied by (a570/ae).

Therefore, in order to correct the absorbance that has been actually measured by the optical measuring unit 19 to be the absorbance with the light of the desired wavelength of 570 nm, the absorbance that has been actually measured by the optical measuring unit 19 is multiplied by, as the correction coefficient, the value of the ratio of the reference gradient with respect to the desired wavelength to the gradient of the straight line that indicates the relationship between the dilution ratios and the absorbances of the acid red with two or more types of concentrations actually measured by the optical measuring unit 19. The correction-coefficient acquiring unit 34 acquires the value of the ratio as the correction coefficient. The absorbance correcting unit 33a multiplies the absorbance of the reaction liquid of the specimen and the reagent measured by the optical measuring unit 19 by the correction coefficient acquired by the correction-coefficient acquiring unit 34, thereby correcting it to the value of the absorbance with light of the desired wavelength.

Furthermore, the correction-coefficient acquiring unit 34 compares the gradient of the straight line that indicates the relationship between the dilution ratio and the absorbance of the acid red measured by the optical measuring unit 19 with the gradient "a" of the straight line corresponding to each of the wavelengths shown in FIG. 5, thereby identifying the wavelength of the light actually measured by the optical measuring unit 19.

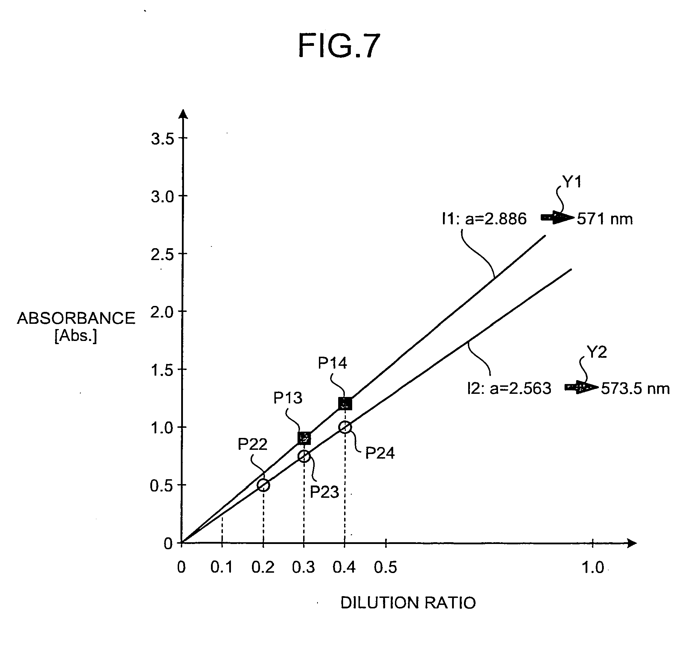

As shown in FIG. 7, if the optical measuring unit 19 measures the absorbance of the acid red at the dilution ratio 0.3 and the absorbance of the acid red at the dilution ratio 0.4, the correction-coefficient acquiring unit 34 obtains a straight line 11 that passes through a point P13 and a point P14 on the basis of the absorbance of the acid red at the dilution ratio 0.3 indicated by the point P13 shown in FIG. 7 and the absorbance of the acid red at the dilution ratio 0.4 indicated by the point P14 and calculates the gradient "a" of the straight line 11. After calculating the gradient "a" of the straight line 11, the correction-coefficient acquiring unit 34 refers to the gradients of the respective wavelengths shown in FIG. 5 from the storage unit 35 and then identifies the wavelength that has the gradient identical to that of the calculated gradient as the wavelength of the light to be actually measured by the optical measuring unit 19. In this case, because the correction-coefficient acquiring unit 34 calculates that the gradient of the straight line 11 is 2.886, as indicated by an arrow Y1, the correction-coefficient acquiring unit 34 determines that the straight line 11 corresponds to the light of 571 nm wavelength and identifies that the wavelength of the light to be actually measured by the optical measuring unit 19 is 571 nm.

An explanation will be given of a case where the optical measuring unit 19 measures the absorbance of the acid red at the dilution ratio 0.2, the absorbance of the acid red at the dilution ratio 0.3, and the absorbance of the acid red at the dilution ratio 0.4 after a predetermined period elapses. In this case, the correction-coefficient acquiring unit 34 obtains a straight line 12 that passes through a point P22, a point P23, and a point P24 on the basis of the absorbance of the acid red at the dilution ratio 0.2 indicated by the point P22 shown in FIG. 7, the absorbance of the acid red at the dilution ratio 0.3 indicated by the point P23, and the absorbance of the acid red at the dilution ratio 0.4 indicated by the point P24 and calculates the gradient "a" of the straight line 12. After calculating the gradient "a" of the straight line 12, the correction-coefficient acquiring unit 34 refers to the gradients of the respective wavelengths shown in FIG. 5 from the storage unit 35 and determines the wavelength corresponding to the calculated gradient. Because the gradient of the straight line 12 is 2.563, the correction-coefficient acquiring unit 34 determines that the gradient of the straight line 12 corresponds to the range from 573 nm to 574 nm, whose values are closest to the gradient "a" of the straight line 12, and calculates the difference, the ratio, and the like, with the calculated gradient, thereby identifying that the wavelength of the light to be actually measured by the optical measuring unit 19 is 573.5 nm, as indicated by an arrow Y2. In this manner, in the analyzer 1, it is possible to absolutely acquire the amount of shift between the wavelength of the light to be actually measured by the optical measuring unit 19 and the desired wavelength.

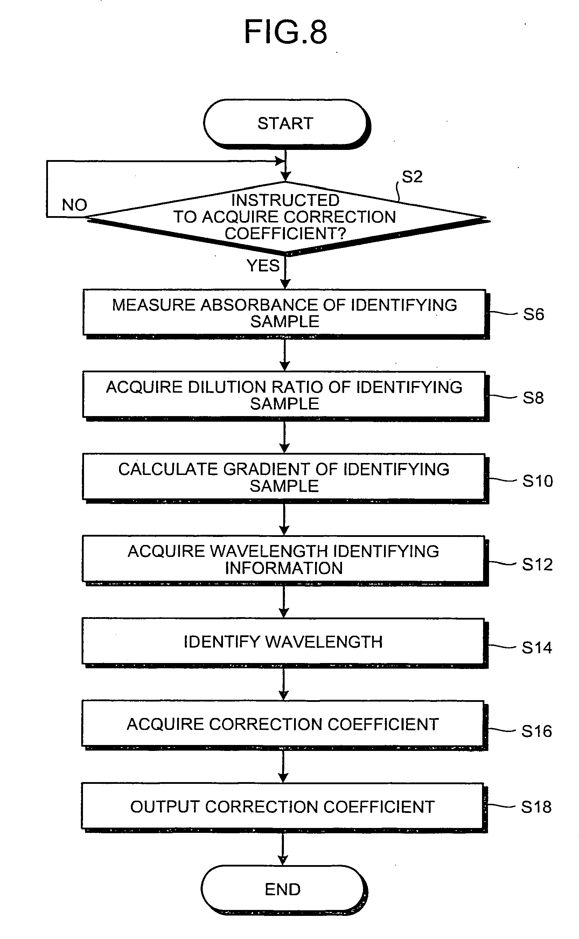

Next, the correction-coefficient acquiring process performed by the analyzer 1 is explained with reference to FIG. 8. As shown in FIG. 8, the correction-coefficient acquiring unit 34 determines whether it is instructed to acquire the correction coefficient on the basis of instruction information input from the input unit 32 (Step S2). An instruction to acquire the correction coefficient is issued, for example, if a selection field for instructing the acquisition of the correction coefficient is selected from a menu field displayed on a display screen that forms the output unit 36 by an operator's operation of the input unit 32, whereby the instruction information for instructing to identify the wavelength for the optical measuring unit 19 is input from the input unit 32 to the control unit 31.

The correction-coefficient acquiring unit 34 repeats the determination at Step S2 until the correction-coefficient acquiring unit 34 determines that it is instructed to acquire the correction coefficient. When the correction-coefficient acquiring unit 34 determines that it is instructed to acquire the correction coefficient (Step S2: Yes), the correction-coefficient acquiring unit 34 instructs the optical measuring unit 19 to measure the absorbances of the identifying samples, such as acid red, diluted at the respective dilution ratios. The optical measuring unit 19 measures the absorbances of the identifying samples (Step S6) and outputs a measurement result. The correction-coefficient acquiring unit 34 then acquires each of the dilution ratios of the identifying samples measured by the optical measuring unit 19 on the basis of information input from the input unit 32 (Step S8). The correction-coefficient acquiring unit 34 then acquires a straight line that indicates the relationship between the dilution ratios of the identifying samples and the absorbances of the wavelength identifying samples, thereby calculating the gradient of the straight line of the identifying sample (Step S10). The correction-coefficient acquiring unit 34 then acquires, as wavelength identifying information, the gradients of the straight lines for the respective wavelengths that each indicate the relationship between the dilution ratio and the absorbance of the identifying sample obtained in advance for one or more wavelengths, for example, as exemplified in FIG. 5, from the storage unit 35 (Step S12). The correction-coefficient acquiring unit 34 then identifies the wavelength of the light to be actually measured by the optical measuring unit 19 on the basis of the degree of coincidence between the gradient of the straight line acquired at Step S10 and the gradient for each of the wavelengths acquired as the wavelength identifying information at Step S12 (Step S14).

The correction-coefficient acquiring unit 34 then acquires, from the storage unit 35, the reference gradient that is the gradient of the straight line that indicates the relationship between the concentration and the absorbance of the identifying sample obtained in advance for the desired wavelength and acquires, as the correction coefficient, the value of the ratio of the reference gradient to the gradient of the straight line for each wavelength that indicates the relationship between the dilution ratio and the absorbance of the identifying sample calculated at Step S10 (Step S16). The correction-coefficient acquiring unit 34 then outputs the acquired correction coefficient to the absorbance correcting unit 33a in the analyzing unit 33 (Step S18) and terminates the correction-coefficient acquiring process. The analyzer 1 may perform the correction-coefficient acquiring process shown in FIG. 8 before the analyzer 1 is shipped or may perform the correction-coefficient acquiring process regularly after the analyzer 1 is installed.

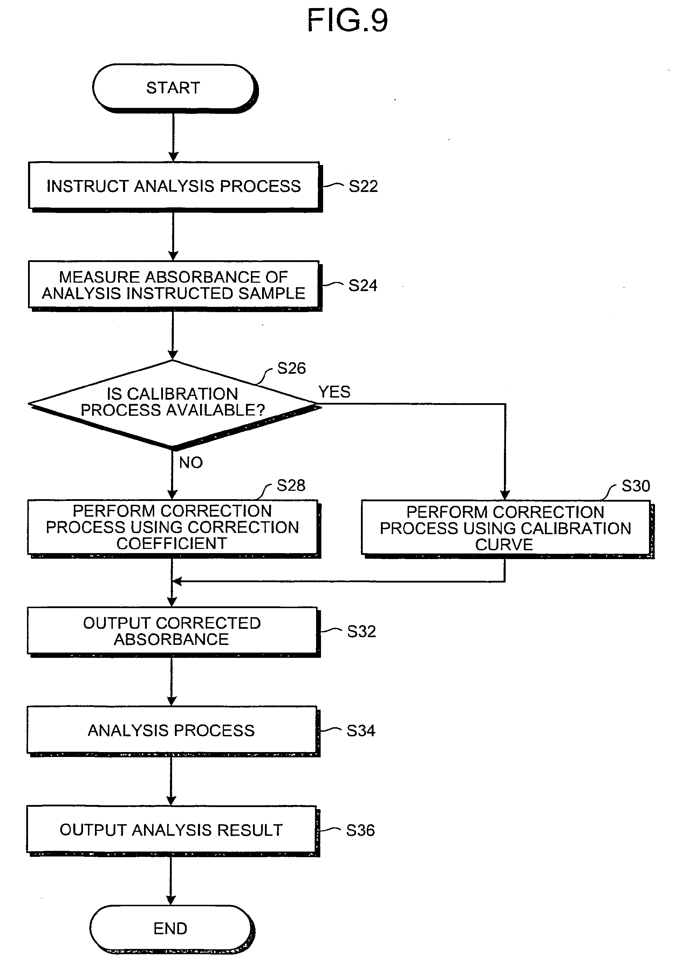

Next, the analysis process performed by the analyzer 1 is explained with reference to FIG. 9. As shown in FIG. 9, the control unit 31 instructs, on the basis of instruction information input from the input unit 32, each unit of the analyzer 1 to perform the analysis process corresponding to an instructed analysis item on a specimen that is an analysis object (Step S22). After the units of the analyzer 1 dispenses the specimen and the reagent corresponding to the instructed analysis item in the reaction vessel 21 and stirs the specimen and the reagent, the optical measuring unit 19 measures the absorbance of the analysis instructed sample, which is the reaction liquid of the specimen for which the analysis has been instructed and the reagent (Step S24). The measurement result of the absorbance of the analysis instructed sample for which the optical measurement has been performed by the optical measuring unit 19 is output to the analyzing unit 33.

The analyzing unit 33 determines whether a calibration process is available for the analysis item performed for the analysis instructed sample (Step S26). If the analyzing unit 33 determines that the calibration process is not available for the analysis item performed for the analysis instructed sample (Step S26: No), the absorbance correcting unit 33a performs correction process using the correction-coefficient (Step S28). In the correction process using the correction-coefficient, the absorbance correcting unit 33a multiplies the absorbance measured by the optical measuring unit 19 by the correction coefficient acquired by the correction-coefficient acquiring unit 34, thereby obtaining the correction value for the absorbance of the analysis instructed sample.

Conversely, if the analyzing unit 33 determines that the calibration process is available for the analysis item performed for the analysis instructed sample (Step S26: Yes), the absorbance correcting unit 33a performs correction process using a calibration-curve (Step S30). The absorbance correcting unit 33a obtains the correction value for the absorbance of the analysis instructed sample on the basis of the calibration curve created in the calibration process.

The absorbance correcting unit 33a then outputs the corrected absorbance obtained through the correction process using the correction-coefficient (Step S28) or the correction process using the calibration-curve (Step S32), and the analyzing unit 33 performs the analysis process to analyze the analysis instructed sample by performing an arithmetic process, or the like, corresponding to the analysis item on the corrected absorbance (Step S34). The output unit 36 then outputs an analysis result obtained by the analyzing unit 33 (Step S36) and terminates the analysis process.

In this manner, the analyzer 1 according to the present embodiment corrects a measurement error due to the gap between the wavelength of the light to be actually measured by the optical measuring unit 19 and the desired wavelength by using the gradient of the straight line that indicates the relationship between the concentrations and the absorbances of two or more identifying samples having different concentrations and having the absorbance characteristics such that there is a simple slope in a wavelength band that includes the desired wavelength to be measured and the reference gradient that is the gradient of the straight line that indicates the relationship between the concentrations and the absorbances of the identifying samples obtained in advance for the desired wavelength. Specifically, the analyzer 1 can correct the measurement error due to the gap between the wavelength of the light to be actually measured by the optical measuring unit 19 and the desired wavelength without using the calibration curve obtained by the calibration process.

Therefore, according to the present embodiment, even if the calibration process cannot be performed for an analysis item, it is possible to enhance the accuracy of analysis data to be output to the same level as that of an analysis item for which the calibration process is available and to reduce an inter-device difference of analysis data output from each analyzer, thereby obtaining an analysis result with high analysis accuracy.

In the present embodiment, it is possible to obtain the reference gradient that is the gradient of the straight line that indicates the relationship between the concentrations and the absorbances of the identifying samples obtained in advance for the desired wavelength and the gradient of the straight line that indicates the relationship between the dilution ratios and the absorbances of two or more types of acid red actually measured by the optical measuring unit 19 and, therefore, the correction coefficient can be obtained and the correction process can be performed. Therefore, the analyzer 1 does not necessarily need to perform the wavelength identifying process (Step S14) shown in FIG. 8.

Although an explanation has been given, with reference to FIG. 5, of the case where the wavelength is identified by using the gradients of the straight lines that indicate the relationships between the absorbances and the concentrations for a plurality of wavelengths as the wavelength identifying process of the correction-coefficient acquiring unit 34, the present invention is not limited to this. The correction-coefficient acquiring unit 34 may identify whether the wavelength of the light to be actually measured by the optical measuring unit 19 corresponds to or shifts from the desired wavelength by referring to the gradient of the straight line that indicates the relationship between the absorbance and the concentration for one wavelength that is the desired wavelength and determining whether this gradient corresponds to the gradient of the straight line that indicates the relationship between the absorbance and the concentration of the identifying sample that has been actually measured by the optical measuring unit 19.

Although an explanation is given, as an example, of the case where the analyzer 1 performs the wavelength identifying process on the basis of the value of each of the gradients of the straight lines that indicate the relationship between the concentration and the absorbance of the identifying sample from 570 nm to 575 nm, the present invention is not limited to this. It is possible that arithmetic expressions that indicate the relationship between the respective wavelengths and the respective gradients are obtained in advance and, by using the arithmetic expressions, a wavelength that corresponds to the gradient of a straight line that indicates the relationship between the dilution ratio and the absorbance of two or more types of acid red that have been actually measured by the optical measuring unit 19 is obtained as the wavelength to be actually measured by the optical measuring unit 19.

In the present embodiment, an explanation is given, as an example, of the case where the acid red is used as the identifying sample that corresponds to the 570 nm band, the present invention is, of course, not limited to this. It is possible that a pigment solution with the absorbance characteristics such that there is a simple slope in a band including the desired wavelength is set as the identifying sample.

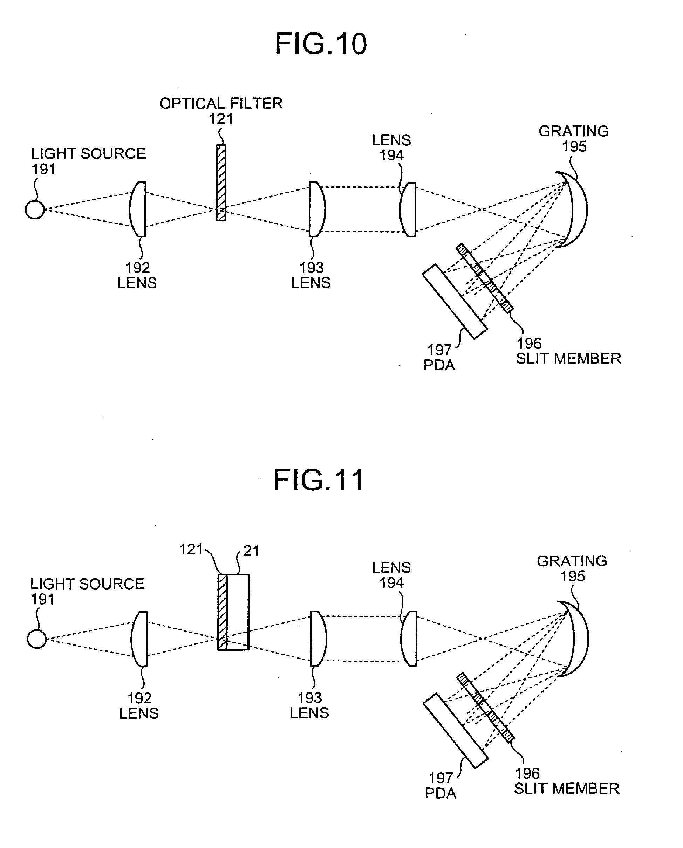

In the present embodiment, an explanation is given, as an example, of the case where the pigment solution with each concentration, such as the acid red, is injected into the reaction vessel 21; however, the present invention is, of course, not limited to this. For example, as shown in FIG. 10, it is possible that, in the analyzer 1, optical filters 121 having the same shape as the reaction vessel 21 and different wavelength transmission characteristic are placed as the identifying sample on the reaction table 13 instead of the reaction vessels 21 in which the acid red is injected, and the gradient of a straight line that indicates the relationship between the wavelength transmission characteristic and the transmittance is calculated on the basis of each transmittance of the optical filters 121, whereby the absorbance of the reaction liquid is corrected. In this case, the transmittance of the optical filter 121 with each wavelength transmittance characteristic is measured in advance for a desired wavelength to be measured, and the analyzer 1 stores therein the gradient of a straight line that indicates the relationship between the measured transmittances and the wavelength transmission characteristics as a reference gradient. Alternatively, in the analyzer 1, for example, as shown in FIG. 11, the optical filters 121 with their respective wavelength transmission characteristics are placed in the reaction vessels 21, respectively, and the gradient of a straight line that indicates the relationship between the wavelength transmission characteristic and the transmittance is calculated on the basis of each transmittance of the optical filters 121 and the reaction vessel 21, whereby the absorbance of the reaction liquid is corrected. In this case, the transmittance of the reaction vessel 21 in which the optical filter 121 with each wavelength transmission characteristic is placed is measured in advance for a desired wavelength that is a measurement object, and the analyzer 1 stores therein the gradient of a straight line that indicates the relationship between the measured transmittances and the wavelength transmission characteristics as a reference gradient. Because the transmittance is a degree of transmittance of light through a material, the transmittance is the ratio between an amount of output light and an amount of received light. Because the absorbance is a degree of absorption of light into a material, the absorbance is the ratio between an amount of light absorbed into the material and an amount of output light obtained on the basis of an amount of transmitted light. Because absorbance and transmittance have a relationship like two sides of the same coin, it is possible to correct the absorbance if the transmittance of the optical filter is used in the same manner as if the pigment solution is used.

The analyzer 1 described in the above embodiment can be implemented by causing a computer system to execute prepared programs. The computer system implements processing operations of the analyzer by reading and executing programs recorded on a predetermined recording medium. The predetermined recording medium includes all recording media on which programs readable by the computer system are recorded, for example, a "communication medium" on which programs are stored for a short period of time upon transmission of the programs, such as a hard disk drive (HDD) arranged inside or outside of the computer system, as well as a "portable physical medium", such as a flexible disk (FD), a CD-ROM, a MO disk, a DVD disk, a magnetic optical disk, or an IC card. Furthermore, the computer system acquires programs from a management server or a different computer system connected via a network and implements processing operations of the analyzer by executing the acquired programs.

### INDUSTRIAL APPLICABILITY

As described above, the analyzer and the analysis method according to the present invention are useful for an analyzer and an analysis method that make it possible to obtain an analysis result with high analysis accuracy even for an analysis item for which a calibration process cannot be performed.

## Claims

1. An analyzer that analyzes a specimen on basis of an absorbance of a reaction liquid of the specimen and a reagent, the analyzer comprising:
a measuring unit that measures absorbances of two or more identifying samples having different concentrations and having absorbance characteristics such that there is a simple slope in a wavelength band including a desired wavelength to be measured and also measures an absorbance of a reaction liquid of a specimen that is an analysis target and a reagent;
a calculating unit that calculates a gradient of a straight line indicating a relationship between the concentrations and the absorbances of the identifying samples measured by the measuring unit;
a correcting unit that corrects the absorbance of the reaction liquid of the specimen and the reagent measured by the measuring unit by using a reference gradient that is a gradient of a straight line indicating a relationship between concentrations and absorbances of the identifying samples obtained in advance for the desired wavelength, and the gradient calculated by the calculating unit; and
an analyzing unit that analyzes the specimen on the basis of the absorbance corrected by the correcting unit.

2. The analyzer according to claim 1, wherein the correcting unit multiplies the absorbance of the reaction liquid of the specimen and the reagent measured by the measuring unit by a value of a ratio of the reference gradient to the gradient calculated by the calculating unit, thereby obtaining a correction value of the absorbance of the reaction liquid of the specimen and the reagent.

3. The analyzer according to claim 1 or 2, wherein the identifying samples are pigment solutions.

4. The analyzer according to claim 1 or 2, wherein the identifying samples are optical filters.

5. An analysis method for analyzing a specimen on basis of an absorbance of a reaction liquid of the specimen and a reagent, the analysis method comprising:
a first measuring step of measuring absorbances of two or more identifying samples having different concentrations and having absorbance characteristics such that there is a simple slope in a wavelength band including a desired wavelength to be measured;
a calculating step of calculating a gradient of a straight line indicating a relationship between the concentrations and the absorbances of the identifying samples measured at the first measuring step;
a second measuring step of measuring an absorbance of a reaction liquid of a specimen that is an analysis target and a reagent;
a correcting step of correcting the absorbance of the reaction liquid of the specimen and the reagent measured at the second measuring step by using a reference gradient that is a gradient of a straight line indicating a relationship between concentrations and absorbances of the identifying samples obtained in advance for the desired wavelength, and the gradient calculated at the calculating; and
analyzing the specimen on the basis of the absorbance corrected at the correcting.

6. The analysis method according to claim 5, wherein, at the correcting step, a correction value of the absorbance of the reaction liquid of the specimen and the reagent is obtained by multiplying the absorbance of the reaction liquid of the specimen and the reagent measured at the second measuring step by a value of a ratio of the reference gradient to the gradient calculated at the calculating step.

7. The analysis method according to claim 5 or 6, wherein the identifying samples are pigment solutions.

8. The analysis method according to claim 5 or 6, wherein the identifying samples are optical filters.
